(19) **Europäisches Patentamt European Patent Office Office européen des brevets**

(11) **EP 1 103 830 B1**

(12) **FASCICULE DE BREVET EUROPEEN**

(45) Date de publication et mention
de la délivrance du brevet:
**07.03.2007 Bulletin 2007/10**

(51) Int Cl.:
***G02B 6/02*** (2006.01)

(21) Numéro de dépôt: **00403301.5**

(22) Date de dépôt: **24.11.2000**

(54) **Fibre optique à dispersion chromatique décalée pour systèmes de transmission à fibre optique à multiplexage en longueurs d'onde**

Dispersionsverschobene optische Faser für ein faseroptisches
Wellenlängenmultiplexübertragungssystem

Dispersion-shifted optical fibre for wavelength dividion multipexing optical fiber transmission systems

(84) Etats contractants désignés:
**AT BE CH CY DE DK ES FI FR GB GR IE IT LI LU MC NL PT SE TR**

(30) Priorité: **25.11.1999 FR 9914829**

(43) Date de publication de la demande:
**30.05.2001 Bulletin 2001/22**

(73) Titulaire: **Draka Comteq B.V.**
**1018 TX Amsterdam (NL)**

(72) Inventeurs:
• **Sillard, Pierre**
  **78150 Le Chesnay (FR)**
• **de Montmorillon, Louis-Anne**
  **75017 Paris (FR)**
• **Fleury, Ludovic**
  **78390 Bois d'Arcy (FR)**
• **Nouchi, Pascale**
  **78600 Maisons Laffitte (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 0 668 520          EP-A- 0 883 002**
**EP-A- 0 938 018          US-A- 5 838 867**

**Description**

La présente invention concerne le domaine des transmissions par fibre optique, et plus particulièrement le domaine des transmissions en multiplexage de longueurs d'onde à fibre de ligne à dispersion chromatique décalée.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Pour utiliser une fibre dans un système de transmission, et notamment dans un système de transmission à multiplexage en longueurs d'onde, il est intéressant que la fibre dispose d'une grande surface effective dans la plage de longueurs d'onde du multiplex. Une grande surface effective permet de limiter la densité de puissance dans la fibre, à puissance totale constante, et de limiter ou éviter les effets non linéaires indésirables.

Pour les systèmes à haut débit, il est aussi utile que la fibre assure une propagation monomode des canaux du multiplex. ITU-T G 650 donne une définition de la longueur d'onde de coupure en câble. La longueur d'onde de coupure théorique de la fibre est généralement supérieure de plusieurs centaines de nanomètres à la longueur d'onde de coupure en câble. Il apparaît en fait que la propagation dans une fibre optique peut être monomode, même si la longueur d'onde de coupure théorique est supérieure à la longueur d'onde des signaux utilisés : de fait, au-delà d'une distance de quelques mètres ou dizaines de mètres, qui est faible devant les distances de propagation dans les systèmes de transmission à fibre optique, les modes secondaires disparaissent du fait d'un affaiblissement trop important. La propagation dans le système de transmission est alors monomode.

Il est aussi important que la fibre présente une sensibilité aussi faible que possible aux courbures et aux microcourbures. On évalue la sensibilité aux courbures comme expliqué dans la recommandation ITU-T G.650, en mesurant l'atténuation provoquée par l'enroulement de 100 tours d'une fibre autour d'une bobine de rayon 30 mm. La sensibilité aux microcourbures est mesurée de façon connue en soi ; on peut comme dans la suite la mesurer par rapport à une fibre telle que la fibre commercialisée par la demanderesse sous la référence ASMF 200.

Dans les nouveaux réseaux de transmission à hauts débits et multiplexés en longueurs d'onde, il est avantageux de limiter la pente de dispersion chromatique dans la plage de longueurs d'onde du multiplex ; l'objectif est de minimiser au cours de la transmission les distorsions entre les canaux du multiplex.

Sont apparues sur le marché des fibres à dispersion décalée, ou DSF (pour "Dispersion Shifted Fiber" en anglais). Ces fibres sont telles que leur dispersion chromatique est sensiblement nulle à la longueur d'onde de transmission à laquelle elles sont utilisées, cette dernière étant en général différente de la longueur d'onde de 1,3 $\mu$m pour laquelle la dispersion de la silice est sensiblement nulle. En d'autres termes, la dispersion chromatique de la silice, non nulle, est compensée par une augmentation de l'écart d'indice $\Delta n$ entre le coeur de la fibre et la gaine optique. Cet écart d'indice permet de décaler la longueur d'onde pour laquelle la dispersion chromatique est nulle ; il est obtenu par l'introduction de dopants dans la préforme, lors de la fabrication de celle-ci, par exemple par un processus de MCVD connu en soi, et qui n'est pas décrit plus en détail ici. On qualifie de NZ-DSF (pour "Non-Zero Dispersion Shifted Fiber" en anglais) des fibres à dispersion décalée, présentant une dispersion chromatique non nulle pour les longueurs d'onde auxquelles elles sont utilisées. La valeur non nulle de la dispersion chromatique permet de limiter les effets non linéaires dans la fibre, et notamment le mélange à quatre ondes entre les canaux du multiplex.

L'article de NOUCHI P: 'Maximum effective area for non-zero dispersion-shifted fiber' OFC '98. OPTICAL FIBER COMMUNICATION CONFERENCE AND EXHIBIT TECHNICAL DIGEST. CONFERENCE EDITION, SAN JOSE, CA, FEBR. 22 - 27, 1998, page 303/304 304 XP002105703 OPTICAL SOCIETY OF AMERICA ISBN: 0-7803-4415-4 concerne la modélisation de fibres NZ-DSF présentant de fortes surfaces effectives, allant jusque 90$\mu$m$^2$. Plusieurs types de profils y sont étudiés: piédestal, trapèze + anneau, coaxial, coaxial+anneau. Les valeurs visées de dispersion chromatique et de pente de dispersion chromatique étaient ici respectivement égale à 4 ps/nm-km et 0,08 ps/nm$^2$-km à la longueur d'onde de 1550nm.

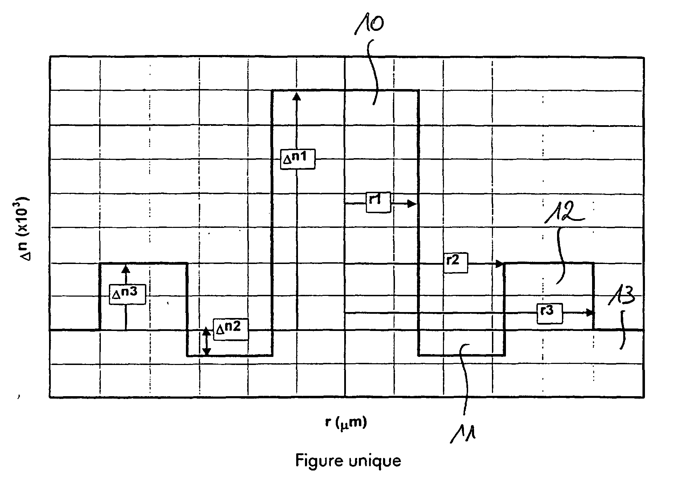

Le document EP-0 883 002 fait état, en relation avec sa figure 3C, de fibres DSF monomodes en câble, ayant un profil en échelon avec anneau, et une pente moyenne de dispersion chromatique de 0,043 ps/nm$^2$.km. Ces fibres ont cependant une dispersion chromatique négative autour de 1550 nm.

Le problème des fibres DSF, tel qu'expliqué dans le document EP-0 859 247 est que la pente de dispersion chromatique croît généralement lorsque la surface effective augmente.

EP-A-0 859 247 décrit des fibres DSF à profil en anneau, et explique qu'il existe pour de telles fibres une plage dans laquelle la surface effective et la pente de dispersion chromatique présentent des sens de variation différents. Les fibres données à titre d'exemple présentent une dispersion chromatique négative entre - 4,5 et - 1,0 ps/nm.km. Elles présentent une longueur d'onde de coupure supérieure à 1500 nm, pour une longueur de fibre de 2 m. Le document précise que cette valeur élevée de longueur d'onde de coupure n'est pas gênante dans la mesure où la longueur d'onde de coupure diminue avec la distance de propagation, et qu'une propagation monomode est assurée pour des distances de transmission de l'ordre de 1000 km.

L'invention propose une fibre optique susceptible d'être mise en câble, et qui présente un compromis avantageux entre la surface effective et la pente de dispersion chromatique, notamment du fait du choix de la longueur d'onde de coupure, et qui soit de fabrication aisée.

Plus précisément, l'invention a pour objet une fibre optique monomode en câble selon la revendication 1.

La fibre selon l'invention a à la fois une forte surface effective, une dispersion chromatique positive autour de 1550 nm et une pente de la dispersion chromatique qui reste faible. Elle a l'avantage de satisfaire les exigences en matière de pertes par courbures et de sensibilité aux microcourbures, tout en étant de fabrication aisée.

La fibre selon l'invention présente une dispersion chromatique à 1550 nm comprise entre 5 et 11 ps/nm.km, et/ou une pente de dispersion inférieure à 0,07 ps/nm$^2$.km.

De préférence, la fibre selon l'invention présente un rapport entre la surface effective et la pente de dispersion chromatique supérieur ou égal à 1000 $\mu$m$^2$.nm$^2$.km/ps. Ce rapport reste de préférence inférieur à 5000 $\mu$m$^2$.nm$^2$.km/ps, voire à 2500 $\mu$m$^2$.nm$^2$.km/ps.

De préférence, la fibre selon l'invention présente une longueur d'onde d'annulation de la dispersion chromatique $\lambda_o$ inférieure ou égale à 1480 nm.

Dans un mode de réalisation, la surface effective de la fibre est supérieure ou égale à 70 $\mu$m$^2$.

La fibre selon l'invention présente des pertes par courbures à 1550 nm inférieures ou égales à 0,05 dB pour 100 tours de fibre autour d'un rayon de 30 mm et de préférence inférieures ou égale à 0,005 dB. Elle peut aussi présenter une sensibilité aux microcourbures inférieure à 1,2 et de préférence inférieure à 0,8.

De préférence, la fibre présente une longueur d'onde de coupure théorique supérieure à 1550 nm, et une longueur d'onde de coupure en câble inférieure à 1300 nm.

Dans un mode de réalisation, la fibre présente une atténuation à 1550 nm inférieure ou égale à 0,23 dB/km, et une dispersion modale de polarisation inférieure ou égale à 0,1 ps.km$^{-0,5}$.

La différence entre l'indice de la partie centrale de la fibre et l'indice de la gaine optique peut être comprise entre 5.10$^{-3}$ et 9.10$^{-3}$. Dans ce cas, le rapport entre le rayon de la partie centrale et le rayon extérieur de l'anneau est compris entre 0,23 et 0,45.

Avantageusement encore, la différence entre l'indice de la zone intermédiaire et l'indice de la gaine optique peut être comprise entre - 4.10$^{-3}$ et 1.10$^{-3}$, et de préférence entre - 3.10$^{-3}$ et 5.10$^{-4}$. Dans ce cas, le rapport entre le rayon extérieur de la zone intermédiaire et le rayon extérieur de l'anneau peut être compris entre 0,45 et 0,75, et de préférence entre 0,48 et 0,7.

Selon un mode de réalisation avantageux, la différence entre l'indice de l'anneau et l'indice de la gaine optique peut être comprise entre 5.10$^{-4}$ et 5.10$^{-3}$. Dans ce cas, il est avantageux que le rayon extérieur de l'anneau soit compris entre 7 et 13 $\mu$m.

Selon l'invention, l'intégrale

$$\left\{ \quad S_{23} = 2.\int_{r_1}^{r_3} \Delta n(r).r.dr \right.$$ (où $r_3$ est le rayon extérieur de la zone annulaire), est comprise entre 30.10$^{-3}$ et 150.10$^{-3}$ $\mu$m$^2$, et de préférence entre 55.10$^{-3}$ et 140.10$^{-3}$ $\mu$m$^2$.

Par ailleurs, on peut choisir avantageusement les paramètres de la fibre selon l'invention de manière à vérifier une ou plusieurs des relations suivantes, dans lesquelles r est le rayon et $\Delta n(r)$ la différence d'indice entre l'indice au point de rayon r et l'indice de la gaine optique :

$$S_1 = 2.\int_0^{r_1} \Delta n(r).r.dr$$ (où $r_1$ est le rayon de la partie centrale), compris entre 45.10$^{-3}$ et 110.10$^{-3}$ $\mu$m$^2$, et de préférence entre 50.10$^{-3}$ et 100.10$^{-3}$ $\mu$m$^2$.

$$S_{12} = 2.\int_0^{r_2} \Delta n(r).r.dr$$ (où $r_2$ est le rayon extérieur de la zone intermédiaire), supérieur à 25.10$^{-3}$ $\mu$m$^2$, et de préférence compris entre 30.10$^{-3}$ et 100.10$^{-3}$ $\mu$m$^2$.

$$S_{123} = 2.\int_0^{r_3} \Delta n(r).r.dr$$ inférieur à 220.10$^{-3}$ $\mu$m$^2$, et de préférence compris entre 130.10$^{-3}$ et 205.10$^{-3}$ $\mu$m$^2$.

**EP 1 103 830 B1**

L'invention propose encore un système de transmission à fibre optique à multiplexage en longueurs d'onde, comprenant une telle fibre comme fibre de ligne. Il est alors possible de prévoir en outre de la fibre de compensation de dispersion.

D'autres caractéristiques et avantages de l'invention apparaîtront à la lecture de la description qui suit des modes de réalisation de l'invention, donnés à titre d'exemple et en référence à la figure unique annexée, qui montre une représentation schématique du profil d'indice en échelon avec anneau d'une fibre selon l'invention.

Dans tous les modes de réalisation, les rayons r sont donnés en microns ($\mu$m) et mesurés par rapport à l'axe de la fibre. Les indices $\Delta n$ sont mesurés par la différence avec l'indice de la gaine de la fibre.

La fibre comprend un coeur optique entouré d'une gaine optique 13. Le profil d'indice du coeur optique est constitué, en partant du centre de la fibre, de :

- une partie centrale 10 en échelon de rayon $r_1$ avec une différence d'indice $\Delta n_1$ par rapport à la gaine optique 13 sensiblement constante et positive
- un zone intermédiaire 11 qui s'étend jusqu'à un rayon $r_2$, ayant une différence d'indice $\Delta n_2$ par rapport à la gaine optique 13 sensiblement constante, positive ou négative, et toujours inférieure à $\Delta n_1$
- une zone annulaire ou anneau 12 qui s'étend jusqu'à un rayon $r_3$, ayant une différence d'indice $\Delta n_3$ sensiblement constante, positive et inférieure à $\Delta n_1$.

La gaine optique 13 de la fibre s'étend autour de l'anneau 12.

Le Tableau 1 suivant donne des valeurs possibles de rayons et d'indice pour des fibres présentant ce type de profil en échelon avec anneau.

**Tableau 1**

| N° | $r_1$ | $r_2$ | $r_3$ | $10^{-3}.\Delta n_1$ | $10^{-3}.\Delta n_2$ | $10^{-3}.\Delta n_3$ |
|----|-------|-------|-------|----------------------|----------------------|----------------------|
| 1 | 3,4 | 5,5 | 8,5 | 7,2 | -2,2 | 3,2 |
| 2 | 2,9 | 6,5 | 10 | 7,5 | 0 | 2,2 |
| 3* | 3,3 | 5,1 | 7,8 | 7,1 | -2,1 | 3,2 |
| 4* | 3,7 | 5,6 | 9 | 6,7 | -3,3 | 2,1 |
| 5* | 3,2 | 5,2 | 10,8 | 6,9 | 0 | 1,2 |
| 6* | 3,3 | 6 | 11,6 | 6,8 | 0 | 1,3 |
| 7* | 3 | 5,1 | 8,7 | 7 | 0,35 | 2,5 |
| 8 | 3,6 | 5,7 | 8,8 | 5,9 | 0 | 2,5 |
| * = selon l'invention | | | | | | |

Les caractéristiques des fibres selon l'invention permettent une fabrication par des méthodes classiques ; à titre de comparaison, la valeur de différence d'indice de 1% couramment mentionnée dans l'art antérieur correspond à une différence $\Delta n_1$ égale à $14,5.10^{-3}$. On constate que l'invention n'implique pas de forts indices, ni des couches de rayons très faibles, et évite donc des problèmes de fabrication, et également une atténuation excessive de la fibre.

Les fibres obtenues pour ces valeurs de rayons et d'indices présentent les caractéristiques données dans les lignes correspondantes du Tableau 2 à 1.55 $\mu$m, sauf pour les longueurs d'onde de coupure théorique et d'annulation de la dispersion chromatique. Les unités sont les suivantes :

- longueur d'onde de coupure théorique $\lambda_{dh}$ : nm
- longueur d'onde d'annulation de la dispersion chromatique $\lambda_o$ : nm
- dispersion chromatique C : ps/(nm.km)
- pente de dispersion chromatique C' : ps/(nm$^2$.km)
- surface effective $S_{eff}$ : $\mu$m$^2$
- pertes par courbures PC: dB
- pertes par microcourbures $S_{\mu c}$: néant

Les pertes par courbures sont mesurées comme indiqué plus haut par enroulement de 100 tours de la fibre autour d'un rayon de 30 mm, et par mesure des pertes induites. Les pertes par microcourbures $S_{\mu c}$ sont mesurées par rapport à la fibre ASMF 200 commercialisée par la demanderesse, et sont sans dimension. Le rapport $S_{eff}$/C' présente

4

la dimension $\mu m^2.nm^2.km/ps$.

**Tableau 2**

| N° | $\lambda_{cth}$ | $\lambda_0$ | C | C' | $S_{eff}$ | $S_{eff}/C'$ | PC | $S_{\mu c}$ |
|---|---|---|---|---|---|---|---|---|
| 1 | 1700 | 1475 | 4 | 0,054 | 62 | 1150 | $< 10^{-5}$ | 0,69 |
| 2 | 1780 | 1475 | 4 | 0,057 | 62 | 1090 | $<10^{-5}$ | 0,71 |
| 3* | 1630 | 1460 | 6 | 0,068 | 68 | 1010 | $<10^{-5}$ | 0,73 |
| 4* | 1550 | 1380 | 8 | 0,048 | 62 | 1290 | $< 10^{-5}$ | 0,64 |
| 5* | 1630 | 1410 | 8 | 0,058 | 65 | 1130 | $<10^{-5}$ | 0,67 |
| 6* | 1780 | 1400 | 8 | 0,054 | 65 | 1200 | $<10^{-5}$ | 0,65 |
| 7* | 1780 | 1440 | 8 | 0,075 | 78 | 1040 | $<10^{-5}$ | 0,82 |
| 8 | 1780 | 1370 | 12 | 0,067 | 88 | 1310 | $<10^{-5}$ | 0,93 |
| *= selon l'invention | | | | | | | | |

Dans tous les exemples du Tableau 1, des variations de $5.10^{-4}$ des indices $\Delta n_1$, $\Delta n_2$ et $\Delta n_3$ permettent d'obtenir des résultats similaires. Il en est de même des rayons, qui peuvent varier individuellement de 10 % par rapport aux valeurs données tout en obtenant des résultats analogues.
L'invention peut être fabriquée par l'homme du métier à l'aide de techniques connues, comme le MCVD ou les autres techniques couramment utilisées pour la fabrication des fibres optiques.
La fibre de l'invention peut avantageusement être utilisée comme fibre de ligne dans des systèmes de transmission, et notamment dans des systèmes de transmission à multiplexage en longueurs d'onde pour la plage d'utilisation 1300 nm à 1630 nm. On peut aussi prévoir dans un système utilisant une telle fibre de ligne de la fibre de compensation de dispersion, disposée à intervalles réguliers dans le système, pour limiter l'augmentation de la dispersion chromatique cumulée le long de la ligne de transmission.
Bien entendu, la présente invention n'est pas limitée aux exemples et modes de réalisation décrits et représentés, mais elle est susceptible de nombreuses variantes accessibles à l'homme de l'art.

## Revendications

1. Fibre optique monomode en câble, comprenant un coeur optique entouré d'une gaine optique avec un indice de refraction constant, ledit coeur optique présentant un profil d'indice constitué d'une partie centrale en échelon, entourée d'une zone intermédiaire d'indice de réfraction inférieur à celui de ladite partie centrale, elle-même entourée d'une zone annulaire ayant un indice de réfraction inférieur à celui de ladite partie centrale et supérieur à celui de ladite zone intermédiaire, et de la gaine ladite fibre ayant, pour une longueur d'onde de 1550 nm, une pente de dispersion chromatique comprise entre 0 et 0,1 ps/nm².km, ladite fibre présente un rapport entre la surface effective et la pente de dispersion chromatique supérieur à 900 $\mu m^2.nm^2.km/ps$ et une surface effective supérieure ou égale à 60 $\mu m^2$, ladite fibre étant **caractérisée en ce qu'**elle présente en outre les caractéristiques suivantes, pour une longueur d'onde de 1550 nm :

   - une dispersion chromatique comprise entre 5 et 11 ps/(nm.km), la différence d'indice $\Delta n_1$ entre l'indice de ladite partie centrale et l'indice de ladite gaine est comprise entre $5.10^{-3}$ et $9.10^{-3}$, le rapport $r_1/r_3$ entre le rayon $r_1$ de ladite partie centrale et le rayon extérieur $r_3$ de l'anneau est compris entre 0,23 et 0,45, la grandeur $S_{23}$ définie par $S_{23} = 2.\int_{r_1}^{r_3} \Delta n(r).r.dr$ où r est le rayon et $\Delta n(r)$ la différence d'indice entre l'indice au point de rayon r et l'indice de ladite gaine optique, et où $r_3$ est le rayon extérieur de ladite zone annulaire, est comprise entre $30.10^{-3}$ et $150.10^{-3}\mu m^2$, et]

2. Fibre selon la revendication 1, **caractérisée en ce qu'**elle présente à 1550 nm une pente de dispersion inférieure à 0,07 ps/(nm².km)

3. Fibre selon l'une des revendications 1à 2 **caractérisée en ce qu'**elle présente un rapport entre la surface effective et la pente de dispersion chromatique supérieur ou égal à 1000 $\mu m^2.nm^2.km/ps$, et de préférence inférieur ou égal à 5000 $\mu m^2.nm^2.km/ps$.

4. Fibre selon l'une des revendications 1 à 3, **caractérisée en ce qu'**elle présente une longueur d'onde d'annulation de la dispersion chromatique inférieure ou égale à 1480 nm.

5. Fibre selon l'une des revendications 1 à , **caractérisée en ce qu'**elle présente une surface effective supérieure ou égale à 70 $\mu m^2$.

6. Fibre selon l'une des revendications 1 à 5, **caractérisée en ce qu'**elle présente des pertes par courbures à 1550 nm inférieures ou égales à 0,05 dB pour 100 tours de fibre autour d'un rayon de 30 mm, et de préférence inférieures ou égale à 0,005 dB.

7. Fibre selon l'une des revendications 1 à 6, **caractérisée en ce qu'**elle présente une sensibilité aux microcourbures inférieure à 1,2 et de préférence inférieure à 0,8.

8. Fibre selon l'une des revendications 1 à 7, **caractérisée en ce qu'**elle présente une longueur d'onde de coupure théorique supérieure à 1550 nm.

9. Fibre selon l'une des revendications 1 à 8, **caractérisée en ce qu'**elle présente une longueur d'onde de coupure en câble inférieure à 1300 nm.

10. Fibre selon l'une des revendications 1 à 9, **caractérisée en ce qu'**elle présente une atténuation à 1550 nm inférieure ou égale à 0,23 dB/km.

11. Fibre selon l'une des revendications 1 à 10, **caractérisée en ce qu'**elle présente une dispersion modale de polarisation inférieure ou égale à 0,1 $ps.km^{-0,5}$.

12. Fibre selon l'une des revendications 1 à 11, **caractérisée en ce que** la différence d'indice $\Delta n_2$ entre l'indice de ladite zone intermédiaire et l'indice de ladite gaine est comprise entre $-4.10^{-3}$ et $1.10^{-3}$, et de préférence entre $-3.10^{-3}$ et $5.10^{-4}$.

13. Fibre selon la revendication 12, **caractérisée en ce que** le rapport $r_2/r_3$ entre le rayon extérieur $r_2$ de ladite zone intermédiaire et le rayon extérieur $r_3$ de ladite zone annulaire est compris entre 0,45 et 0,75, et de préférence entre 0,48 et 0,7.

14. Fibre selon l'une des revendication 1 à 13, **caractérisée en ce que** la différence d'indice $\Delta n_3$ entre l'indice de ladite zone annulaire et l'indice de ladite gaine est comprise entre $5.10^{-4}$ et $5.10^{-3}$.

15. Fibre selon la revendications 14, **caractérisée en ce que** le rayon extérieur $r_3$ de ladite zone annulaire est compris entre 7 et 13 $\mu m$.

16. Fibre selon l'une des revendications 1 à 15 **caractérisée en ce que** la grandeur S, définie par

$$S_1 = 2.\int_0^{r_1} \Delta n(r).r.dr\,,$$ où r est le rayon et $\Delta n(r)$ la différence d'indice entre l'indice au point de rayon r et l'indice de ladite gaine optique, et où $r_1$ est le rayon de ladite partie centrale, est comprise entre $45.10^{-3}$ et $110.10^{-3}\mu m^2$, et de préférence entre $50.10^{-3}$ et $100.10^{-3}\mu m^2$.

17. Fibre selon l'une des revendications 1 à 16 **caractérisée en ce que** la grandeur $S_{12}$ définie par

$$S_{12} = 2.\int_0^{r_2} \Delta n(r).r.dr\,,$$ où r est le rayon et $\Delta n(r)$ la différence d'indice entre l'indice au point de rayon r et l'indice de ladite gaine optique, et où $r_2$ est le rayon extérieur de ladite zone intermédiaire, est supérieure à $25.10^{-3}$ $\mu m^2$,

et de préférence comprise entre 30.10$^{-3}$ et 100.10$^{-3}$μm$^2$.

**18.** Fibre selon l'une des revendications 1 à 17 **caracterisée en ce que** la grandeur S$_{23}$ est comprise entre 55. 10$^{-3}$ et 140.10$^{-3}$μm$^2$.

**19.** Fibre selon l'une des revendications 1 à 18 **caractérisée en ce que** la grandeur S$_{123}$ définie par

$$S_{123} = 2.\int_0^{r_3} \Delta n(r).r.dr$$ où r est le rayon et Δn(r) la différence d'indice entre l'indice au point de rayon r et l'indice de ladite gaine optique, et où r$_3$ est le rayon extérieur de ladite zone annulaire, est inférieure à 220.10$^{-3}$ μm$^2$, et de préférence comprise entre 130.10$^{-3}$ et 205.10$^{-3}$μm$^2$.

**20.** Système de transmission à fibre optique à multiplexage en longueurs d'onde, comprenant comme fibre de ligne de la fibre selon l'une des revendications 1 à 19.

**21.** Système de transmission selon la revendication 20, comprenant en outre de la fibre de compensation de dispersion

## Claims

**1.** Optical fibre which is single-mode in cable, comprising an optical core surrounded by an optical cladding which has a constant refractive index, said optical core having an index profile composed of a stepped central portion surrounded by an intermediate zone having a refractive index lower than that of said central portion and itself surrounded by a ring-shaped zone having a refractive index lower than that of said central portion and higher than that of said intermediate zone and of the cladding, said fibre having, for a wavelength of 1550 nm, a chromatic dispersion slope of between 0 and 0.1 ps/nm$^2$.km inclusive, said fibre having a ratio between the effective surface area and the chromatic dispersion slope which is greater than 900 μm$^2$.nm$^2$.km/ps and an effective surface area greater than or equal to 60 μm$^2$,

said fibre being **characterised in that** it additionally has the following characteristics, for a wavelength of 1550 nm:

- a chromatic dispersion of between 5 and 11 ps/(nm.km) inclusive, the difference in index Δn$_1$ between the index of the central portion and the index of said cladding is between 5 x 10$^{-3}$ and 9 x 10$^{-3}$ inclusive, the ratio r$_1$/r$_3$ between the radius r$_1$ of said central portion and the external radius r$_3$ of the ring is between 0.23 and 0.45

inclusive, the quantity S$_{23}$ defined by $$S_{23} = 2.\int_{r_1}^{r_3} \Delta n(r).r.dr$$ , wherein r is the radius and Δn(r) the difference in index between the index at the point of radius r and the index of said optical cladding and wherein r$_3$ is the external radius of said ring-shaped zone, is between 30 x 10$^{-3}$ and 150 x 10$^{-3}$ μm$^2$ inclusive.

**2.** Fibre according to claim 1, **characterised in that** it has, at 1550 nm, a dispersion slope of less than 0.07 ps/(nm$^2$.km).

**3.** Fibre according to one of claims 1 to 2, **characterised in that** it has a ratio between the effective surface area and the chromatic dispersion slope which is greater than or equal to 1000 μm$^2$.nm$^2$.km/ps, and preferably less than or equal to 5000 μm$^2$.nm$^2$.km/ps.

**4.** Fibre according to one of claims 1 to 3, **characterised in that** it has a zero-chromatic-dispersion wavelength of less than or equal to 1480 nm.

**5.** Fibre according to one of claims 1 to 4, **characterised in that** it has an effective surface area greater than or equal to 70 μm$^2$.

**6.** Fibre according to one of claims 1 to 5, **characterised in that** it has bending losses at 1550 nm less than or equal to 0.05 dB for 100 turns of fibre around a radius of 30 mm, and preferably less than or equal to 0.005 dB.

**7.** Fibre according to one of claims 1 to 6, **characterised in that** it has a sensitivity to microbending less than 1.2, and preferably less than 0.8.

8. Fibre according to one of claims 1 to 7, **characterised in that** it has a theoretical cut-off wavelength greater than 1550 nm.

9. Fibre according to one of claims 1 to 8, **characterised in that** it has a cut-off wavelength in cable less than 1300 nm.

10. Fibre according to one of claims 1 to 9, **characterised in that** it has an attenuation at 1550 nm less than or equal to 0.23 dB/km.

11. Fibre according to one of claims 1 to 10, **characterised in that** it has a polarisation mode dispersion less than or equal to 0.1 ps.km$^{-0.5}$.

12. Fibre according to one of claims 1 to 11, **characterised in that** the difference in index $\Delta n_2$ between the index of said intermediate zone and the index of said cladding is between -4 x 10$^{-3}$ and 1 x 10$^{-3}$ inclusive, and preferably between -3 x 10$^{-3}$ and 5 x 10$^{-4}$ inclusive.

13. Fibre according to claim 12, **characterised in that** the ratio $r_2/r_3$ between the external radius $r_2$ of said intermediate zone and the external radius $r_3$ of said ring-shaped zone is between 0.45 and 0.75 inclusive, and preferably between 0.48 and 0.7 inclusive.

14. Fibre according to one of claims 1 to 13, **characterised in that** the difference in index $\Delta n_3$ between the index of said ring-shaped zone and the index of said cladding is between 5 x 10$^{-4}$ and 5 x 10$^{-3}$ inclusive.

15. Fibre according to claim 14, **characterised in that** the external radius $r_3$ of said ring-shaped zone is between 7 and 13 $\mu$m inclusive.

16. Fibre according to one of claims 1 to 15, **characterised in that** the quantity $S_1$ defined by $S_1 = 2. \int_0^{r_1} \Delta n(r).r.dr$ ,

   wherein r is the radius and $\Delta n(r)$ the difference in index between the index at the point of radius r and the index of said optical cladding and wherein $r_1$ is the radius of said central portion, is between 45 x 10$^{-3}$ and 110 x 10$^{-3}$ $\mu$m$^2$ inclusive, and preferably between 50 x 10$^{-3}$ and 100 x 10$^{-3}$ $\mu$m$^2$ inclusive.

17. Fibre according to one of claims 1 to 16, **characterised in that** the quantity $S_{12}$ defined by $S_{12} = 2. \int_0^{r_2} \Delta n(r).r.dr$ ,

   wherein r is the radius and $\Delta n(r)$ the difference in index between the index at the point of radius r and the index of said optical cladding and wherein $r_2$ is the external radius of said intermediate zone, is greater than 25 x 10$^{-3}$ $\mu$m$^2$, and preferably between 30 x 10$^{-3}$ and 100 x 10$^{-3}$ $\mu$m$^2$ inclusive.

18. Fibre according to one of claims 1 to 17, **characterised in that** the quantity $S_{23}$ is between 55 x 10$^{-3}$ and 140 x 10$^{-3}$ $\mu$m$^2$ inclusive.

19. Fibre according to one of claims 1 to 18, **characterised in that** the quantity $S_{123}$ defined by

   $S_{123} = 2. \int_0^{r_3} \Delta n(r).r.dr$ , wherein r is the radius and $\Delta n(r)$ the difference in index between the index at the point of radius r and the index of said optical cladding and wherein $r_3$ is the external radius of said ring-shaped zone, is less than 220 x 10$^{-3}$ $\mu$m$^2$, and preferably between 130 x 10$^{-3}$ and 205 x 10$^{-3}$ $\mu$m$^2$ inclusive.

20. Wavelength multiplexing optical fibre transmission system comprising fibre according to one of claims 1 to 19 as line fibre.

21. Transmission system according to claim 20, additionally comprising dispersion-compensating fibre.

**Patentansprüche**

1. Optische Monomod-Faser als Kabel, umfassend einen von einer optischen Hülle mit einem konstanten Brechungsindex umgebenen optischen Kern, wobei der optische Kern ein Indexprofil aufweist, welches aus einem zentralen Abschnitt in Form einer Stufe umgeben von einer mittleren Zone mit einem Brechungsindex kleiner als demjenigen des zentralen Abschnitts umgeben ist, welche wiederum von einer ringförmigen Zone mit einem Brechungsindex kleiner als demjenigen des zentralen Abschnitts und größer als demjenigen der mittleren Zone und der Hülle umgeben ist, zusammengesetzt ist, wobei die Faser für eine Wellenlänge von 1550 nm eine Steigung der chromatischen Dispersion enthalten zwischen 0 und 0,1 ps/nm$^2$ ×km aufweist, wobei die Faser ein Verhältnis zwischen der effektiven Oberfläche und der Steigung der chromatischen Dispersion größer als 900 $\mu$m$^2$×nm$^2$×km/ps und eine effektive Oberfläche größer oder gleich 60 $\mu$m$^2$ aufweist, wobei die Faser **dadurch gekennzeichnet ist, dass** sie für eine Wellenlänge von 1550 nm unter anderem die folgenden Eigenschaften aufweist:

   - eine chromatische Dispersion enthalten zwischen 5 und 11 ps/(nm×km), wobei der Indexunterschied $\Delta n_1$ zwischen dem Index des zentralen Abschnitts und dem Index der Hülle zwischen $5\times10^{-3}$ und $9\times10^{-3}$ enthalten ist, wobei das Verhältnis $r_1/r_3$ zwischen dem Radius $r_1$ des zentralen Abschnitts und dem Außenradius $r_3$ des Rings zwischen 0,23 und 0,45 enthalten ist, wobei die durch $S_{23}=2\times\int_{r1}^{r3}\Delta n(r)\times r\times dr$ definierte Größe $S_{23}$, wobei r der Radius und $\Delta n(r)$ der Indexunterschied zwischen dem Index am Punkt des Radius r und dem Index der optischen Hülle ist und wobei $r_3$ der Außenradius der ringförmigen Zone ist, zwischen $30\times10^{-3}$ und $150\times10^{-3}$ $\mu$m$^2$ enthalten ist.

2. Faser nach Anspruch 1, **dadurch gekennzeichnet, dass** sie bei 1550 nm eine Steigung der Dispersion kleiner als 0,07 ps/(nm$^2$×km) aufweist.

3. Faser nach einem der Ansprüche 1-2, **dadurch gekennzeichnet, dass** sie ein Verhältnis zwischen der effektiven Oberfläche und der Steigung der chromatischen Dispersion größer oder gleich 1000 $\mu$m$^2$×nm$^2$×km/ps und bevorzugt kleiner oder gleich 5000 $\mu$m$^2$×nm$^2$×km/ps aufweist.

4. Faser nach einem der Ansprüche 1-3, **dadurch gekennzeichnet, dass** sie eine Wellenlänge der Aufhebung der chromatischen Dispersion kleiner oder gleich 1480 nm aufweist.

5. Faser nach einem der Ansprüche 1-4, **dadurch gekennzeichnet, dass** sie eine effektive Oberfläche größer oder gleich 70 $\mu$m$^2$ aufweist.

6. Faser nach einem der Ansprüche 1-5, **dadurch gekennzeichnet, dass** sie bei 1550 nm Verluste durch Krümmungen kleiner oder gleich 0,05 dB für 100 Umläufe der Faser um einen Radius von 30 mm und bevorzugt kleiner oder gleich 0,005 dB aufweist.

7. Faser nach einem der Ansprüche 1-6, **dadurch gekennzeichnet, dass** sie eine Empfindlichkeit gegenüber Mikrokrümmungen kleiner als 1,2 und bevorzugt kleiner als 0,8 aufweist.

8. Faser nach einem der Ansprüche 1-7, **dadurch gekennzeichnet, dass** sie eine theoretische Abschneidewellenlänge größer als 1550 nm aufweist.

9. Faser nach einem der Ansprüche 1-8, **dadurch gekennzeichnet, dass** sie verkabelt eine Abschneidewellenlänge kleiner als 1300 nm aufweist.

10. Faser nach einem der Ansprüche 1-9, **dadurch gekennzeichnet, dass** sie bei 1550 nm eine Dämpfung kleiner oder gleich 0,23 dB/km aufweist.

11. Faser nach einem der Ansprüche 1-10, **dadurch gekennzeichnet, dass** sie eine modale Polarisationsdispersion kleiner oder gleich 0, 1 ps×km$^{-0,5}$ aufweist.

12. Faser nach einem der Ansprüche 1-11, **dadurch gekennzeichnet, dass** der Indexunterschied $\Delta n_2$ zwischen dem

Index der mittleren Zone und dem Index der Hülle zwischen -4×10⁻³ und 1×10⁻³ und bevorzugt zwischen -3×10⁻³ und 5×10⁻⁴ enthalten ist.

13. Faser nach Anspruch 12, **dadurch gekennzeichnet, dass** das Verhältnis $r_2/r_3$ zwischen dem Außenradius $r_2$ der mittleren Zone und dem Außenradius $r_3$ der ringförmigen Zone zwischen 0,45 und 0,75 und bevorzugt zwischen 0,48 und 0,7 enthalten ist.

14. Faser nach einem der Ansprüche 1-13, **dadurch gekennzeichnet, dass** der Indexunterschied $\Delta n_3$ zwischen dem Index der ringförmigen Zone und dem Index der Hülle zwischen 5×10⁻⁴ und 5×10⁻³ enthalten ist.

15. Faser nach Anspruch 14, **dadurch gekennzeichnet, dass** der Außenradius $r_3$ der ringförmigen Zone zwischen 7 und 13 μm enthalten ist.

16. Faser nach einem der Ansprüche 1-15, **dadurch gekennzeichnet, dass** die durch $S_1 = 2 \times \int_0^{r1} \Delta n(r) \times r \times dr$

    definierte Größe $S_1$, wobei r der Radius und $\Delta n(r)$ der Indexunterschied zwischen dem Index am Punkt des Radius r und dem Index der optischen Hülle ist und wobei $r_1$ der Radius des zentralen Abschnitts ist, zwischen 45×10⁻³ und 110×10⁻³ μm² und bevorzugt zwischen 50×10⁻³ und 100×10⁻³ μm² enthalten ist.

17. Faser nach einem der Ansprüche 1-16, **dadurch gekennzeichnet, dass** die durch $S_{12} = 2 \times \int_0^{r2} \Delta n(r) \times r \times dr$

    definierte Größe $S_{12}$, wobei r der Radius und $\Delta n(r)$ der Indexunterschied zwischen dem Index am Punkt des Radius r und dem Index der optischen Hülle ist und wobei $r_2$ der Außenradius der mittleren Zone ist, größer als 25×10⁻³ μm² ist und bevorzugt zwischen 30×10⁻³ und 100×10⁻³ μm² enthalten ist.

18. Faser nach einem der Ansprüche 1-17, **dadurch gekennzeichnet, dass** die Größe $S_{23}$ zwischen 55×10⁻³ und 140×10⁻³ μm² enthalten ist.

19. Faser nach einem der Ansprüche 1-18, **dadurch gekennzeichnet, dass** die durch $S_{123} = 2 \times \int_0^{r3} \Delta n(r) \times r \times dr$

    definierte Größe $S_{123}$, wobei r der Radius und $\Delta n(r)$ der Indexunterschied zwischen dem Index am Punkt des Radius r und dem Index der optischen Hülle ist und wobei $r_3$ der Außenradius der ringförmigen Zone ist kleiner als 220×10⁻³ μm² ist und bevorzugt zwischen 130×10⁻³ und 205×10⁻³ μm² enthalten ist.

20. Transmissionssystem mit optischer Faser zum Wellenlängenmultiplexen, umfassend die Faser nach einem der Ansprüche 1-19 als Leitungsfaser.

21. Transmissionssystem nach Anspruch 20, weiterhin umfassend eine Faser zur Dispersionskompensierung.

Figure unique